# EUROPÄISCHE PATENTSCHRIFT

(11) **EP 1 202 586 B1**
(45) Veröffentlichungstag und Bekanntmachung des Hinweises auf die Patenterteilung: **25.01.2006**
(21) Anmeldenummer: 01440318.2
(22) Anmeldetag: 01.10.2001
(51) Int. Cl.: H04Q 7/30

(54) **Verfahren und Vorrichtung (RNC) zum Steuern eines Funkzellenclusters bestehend aus mehreren Funkzellen eines Multistandard-Funknetzwerks**
Method and apparatus for controlling a radio cell cluster comprising multiple radio cells of a multi-standard radio network
Procédé et dispositif de commande d'un groupe des cellules radio comprenant plusieurs cellules radio d'un réseau radio multistandard

(30) Priorität: 25.10.2000 DE 10052929
(43) Veröffentlichungstag der Anmeldung: 02.05.2002
(73) Patentinhaber: ALCATEL, 75008 Paris (FR)
(72) Erfinder: Haberland, Bernd, 70186 Stuttgart (DE)
(74) Vertreter: Rausch, Gabriele

(56) Entgegenhaltungen:
- EP-A- 1 014 751
- WO-A-00/36872
- WO-A-00/38383
- WO-A-99/30514

## Beschreibung

Die vorliegende Erfindung betrifft ein Verfahren zur Konfiguration einer Vorrichtung zum Steuern eines Funkzellenclusters umfassend mehrere Funkzellen eines Funknetzwerks. Das Funknetzwerk weist verschiedene Netzkomponenten, nämlich mindestens ein Endgerät (User Equipment, UE), mindestens eine Basisstation (Node B, NB), mindestens eine Vorrichtung (Radio Network Controller, RNC) zum Steuern eines Funkzellenclusters und mindestens eine Vermittlungseinrichtung (Core Network, CN) auf. Die Vorrichtung zum Steuern eines Funkzellenclusters steht über Schnittstellen mit den Netzkomponenten in Verbindung. Das Verfahren umfasst den Schritt:
Vorsehen von mehreren, den verschiedenen Schnittstellen zugeordnete Protokollstacks zum Abarbeiten von Protokollen.

Außerdem betrifft die Erfindung eine Vorrichtung (Radio Network Controller, RNC) zum Steuern eines Funkzellenclusters umfassend mehrere Funkzellen eines Funknetzwerks. Das Funknetzwerk weist verschiedene Netzkomponenten, nämlich mindestens ein Endgerät (User Equipment, UE), mindestens eine Basisstation (Node B, NB), den RNC, wahlweise weitere RNCs und mindestens eine Vermittlungseinrichtung (Core Network, CN) auf. Der RNC steht über Schnittstellen mit den übrigen Netzkomponenten in Verbindung und weist mehrere Multi-Prozessor-Einheiten umfassend mehrere Prozessorgruppen mit jeweils mehreren Einzelprozessoren auf. Es sind den verschiedenen Schnittstellen zugeordnete Protokollstacks zum Abarbeiten von Protokollen vorgesehen.

Ein Netzelement des Funknetzwerks sind Teilnehmer-Endgeräte (sog. User Equipment), die bspw. als Mobilfunktelefone ausgebildet sind. Ein weiteres Netzelement sind Basisstationen, die für die Versorgung von Funkzellen eingesetzt werden. Das Funknetzwerk ist geographisch in eine Vielzahl von Funkzellen unterteilt. In jeder Funkzelle ist jeweils mindestens eine Basisstation angeordnet. In einem Funknetzwerk, das nach dem UMTS-Standard arbeitet, werden die Basisstationen als Node B bezeichnet. Die Basisstationen unterstützen den Verbindungsaufbau zu den Endgeräten und stellen die Verbindungen zu mehreren Endgeräten in einer Funkzelle her. Die Verbindung ist entweder als eine permanente Verbindung zur Übermittlung von leitungsvermittelten Daten (circuit switched data) oder als eine virtuelle Verbindung zur Übermittlung von paketvermittelten Daten (packet switched data) ausgebildet. Die über die Verbindung übertragenen Signale sind digitale Sprach- oder Datensignale.

Ein weiteres Netzelement sind Vorrichtungen zum Steuern eines Funkzellenclusters. Mehreren Basisstationen ist jeweils einer solchen Vorrichtung zugeordnet. Eine Vorrichtung zum Steuern eines Funkzellenclusters umfasst etwa 200 bis 1000 Basisstationen. Im UMTS-Standard wird eine solche Vorrichtung als Radio Network Controller (RNC) bezeichnet. Die Vorrichtung steuert bspw. die Funkressourcen (Radio Resource Management) oder die Leistungsressourcen (Terrestrial Resource Management) eines Funkzellenclusters. Insbesondere muss eine solche Vorrichtung einen Handover (Übergang eines Endgeräts von einer Funkzelle in eine andere Funkzelle) oder im UMTS-Standard den Macro Diversity Mode (Verbindung eines Endgeräts zu bis zu sechs Basisstationen) steuern.

Ein weiteres Netzelement ist mindestens eine dem RNC übergeordnete Vermittlungseinrichtung (sog. Core Network, CN). Eine Kommunikationsverbindung von einem Endgerät zu einem anderen oder zu einem Festnetz-Teilnehmer wird bspw. über ein solches CN hergestellt.

Ein RNC steht über Schnittstellen mit den übrigen Netzkomponenten des Funknetzwerks in Verbindung. So weist ein RNC mindestens eine Iu-Schnittstelle zu einem CN, mindestens eine Iur-Schnittstelle zu einem weiteren RNC, mindestens eine Iub-NB-Schnittstelle zu einer Basisstation und mindestens eine logische Iub-UE-Schnittstelle zu einem Endgerät UE, die physikalisch über die Iub-Schnittstelle geführt wird (im folgenden genannt Iu-UE) auf.

In einem RNC sind mehrere Prozessoren zur Verarbeitung von Nachrichten (sog. Messages) vorgesehen, die von oder zu den übrigen Netzkomponenten des Funknetzwerks eingehen oder abgeschickt werden. Die Nachrichten bestehen aus verschiedenen Abschnitten, bspw. einem Kopf (sog. Header), mehreren Abschnitten mit Transportinformationen und mehreren Abschnitten mit Nutzdaten (sog. Payload). Die Nutzdaten umfassen einen oder mehrere Befehle, die von den Prozessoren der Vorrichtung verarbeitet werden. Die Protokolle können in verschiedene Schichten, eine Transport-Schicht, eine Schicht 1, eine Schicht 2 und eine Schicht 3, eingeteilt werden. Die Schicht 1 und die Schicht 2 werden auch als Radio Processing bezeichnet. Die Schicht 3 wird als Service Control bezeichnet. Die Nachrichten gehen über die Schnittstellen beim RNC ein und werden mittels eines Schaltelements (sog. Switch) an die Prozessoren weitergeleitet. Über den Switch sind die Schnittstellen mit Prozessorbaugruppen bestehend aus mehreren Einzelprozessoren verschaltet.

In dem RNC sind mehrere Protokollstacks vorgesehen, die den verschiedenen Schnittstellen des RNC zugeordnet sind. So sind bspw. Protokollstacks vorgesehen, die der Iu- (Schnittstelle zum CN), der Iur (Schnittstelle zu weiteren RNCs), der Iub-UE (logische, Teilnehmer dedizierte Schnittstelle zum.UE mit physikalischer Schnittstelle zum Node B) oder der Iub-NB-Schnittstelle (Schnittstelle zum NB in wesentlichen für Common Control und Shared Kanäle) zugeordnet sind.

In einem der Iub-UE-Schnittstelle zugeordneten Protokollstack werden im wesentlichen die nachfolgenden Protokolle abgearbeitet: In der Transport-Schicht die Protokolle Asynchronous Transfer Mode (ATM) und ATM Adaptation Layer Type 2 (AAL2) für interne Verbindungen; in der Schicht 1 die Protokolle Frame Protocol (FP) und Diversity Handover (DHO); in der Schicht 2 die Protokolle Medium Access Control (MAC) und Radio Resource Control (RLC) und in der Schicht 3 das Protokoll Radio Resource Control (RRC).

In einem der Iub-NB-Schnittstelle zugeordneten Protokollstack werden im wesentlichen die nachfolgenden Protokolle abgearbeitet: In der Transport-Schicht die Protokolle Asynchronous Transfer Mode (ATM) und ATM Adaptation Layer Type 2/5 (AAL2/5) für die User- und Kontrollebene für interne und externe Verbindungen; in der Schicht 1 das Frame Protocol (FP); in der Schicht 2 die Protokolle Medium Access Control (MAC) und Radio Resource Control (RLC) und in der Schicht 3 das Protokoll Node B Application Part (NBAP) und das ATM AAL2 Management Protocol (ALCAP).

In einem der Iu/Iur-Schnittstelle zugeordneten Protokollstack werden im wesentlichen die nachfolgenden Protokolle abgearbeitet: In der Transport-Schicht die Protokolle Asynchronous Transfer Mode (ATM) und ATM Adaptation Layer Type 2/5 (AAL2/5) für die User- und Kontrollebene für interne und externe Verbindungen; in der Schicht 1 das Frame Protocol (FP); in der Schicht 2 das Service Specific Connection Oriented Protocol (SSCOP) und in der Schicht 3 die Protokolle Radio Access Network Application Part (RANAP), Radio Access Network Subsystem Application Part und das ATM AAL2 Management Protocol (ALCAP).

Die Protokolle der Transport-Schicht und der Schichten 1 und 2 werden als Low Level (LL)-Protokolle und die Protokolle der Schicht 3 als High Level (HL)-Protokolle bezeichnet. Von der Schicht 3 bis zum Transport-Layer nehmen die Anforderungen an eine Echtzeitverarbeitung der Protokolle zu.

Nach dem Stand der Technik werden bestimmte Protokolle innerhalb der RNCs zentral auf extra dafür vorgesehenen Leiterplatten (sog. Boards) mit Prozessoren zugewiesen und dort verarbeitet. Die Leiterplatten und/oder die Prozessoren sind für die Verarbeitung der ihnen zugewiesenen Protokolle ausgelegt und optimiert. So ist es bspw. bekannt, die Protokolle Diversity Handover (DHO) und ATM Adaption Layer Type 2 (AAL2) einer extra dedizierten Leiterplatte zuzuweisen. Die Zuweisung geschieht über einen RNC Switch. Für die aus dem Stand der Technik bekannte Zuweisung von bestimmten Protokollen an dedizierte Leiterplatten sind zusätzliche Message-Übertragungen (sog. Hops) über den RNC Switch erforderlich, um zu den anderen Baugruppen des RNC zu gelangen, die den jeweiligen Protokollstack komplettieren. Die zusätzlichen Message-Übertragungen kosten Rechenzeit und Systemressourcen. Die anderen Protokolle werden auf Standard Prozessor Boards verarbeitet.

Dieser Ansatz ist schwierig skalierbar, und eine ausreichende Redundanz kann nur durch eine aufwendige und kostenintensive mehrfache Ausführung der extra dedizierten Leiterplatten erreicht werden.

Die WO 00/38383 bezieht sich auf eine Telekommunikations-Plattform zur Unterstützung von IP (Internet Protokollen). Eine solche Plattform besitzt mehrere Baugruppen mit Prozessoren, die über ein Koppelmedium miteinander verbunden sind. Höhere Protokolle wie z.B. TCP oder UDP werden auf die Prozessoren einer solchen Gruppe verteilt. Ein sogenannter IP-Handler sorgt für die richtige Zuordnung von IP-Paketen zu den zuständigen Baugruppen und Prozessen. Nicht entnommen werden kann dieser Druckschrift jedoch eine Zuweisung der Protokolle zu einem Einzelprozessor in Abhängigkeit davon, welchem Protokollstack die Einzelprotokolle und welcher Schicht innerhalb des Protokollstacks die Protokolle angehören.

Der vorliegenden Erfindung liegt die Aufgabe zu Grunde, die Verarbeitungsgeschwindigkeit innerhalb einer Vorrichtung zum Steuern eines Funkzellenclusters (RNC) zu beschleunigen, die interne Kontrollstruktur sowie den Signalfluss in der RNC-Architektur zu vereinfachen.

Zur Lösung dieser Aufgabe schlägt die Erfindung ausgehend von dem Verfahren zum Steuern eines Funkzellenclusters der eingangs genannten Art ein Verfahren vor, das gekennzeichnet ist durch die nachfolgenden Schritte:
- Vorsehen von Multi-Prozessor-Einheiten umfassend mehrere Prozessorgruppen mit jeweils mehreren Einzelprozessoren in der Vorrichtung zum Steuern eines Funkzellenclusters; und
- Zuweisen eines Protokolls eines Protokollstacks zu einem Einzelprozessor der Multi-Prozessor-Einheiten in Abhängigkeit davon, welchem Protokollstack das Protokoll und welcher Schicht innerhalb des Protokollstacks das Protokoll angehört.
   Erfindungsgemäß wird also vorgeschlagen, mehrere gleich ausgebildete Prozessorbaugruppen, die jeweils mindestens einen Einzelprozessor umfassen, gleichberechtigt nebeneinander anzuordnen, wobei die Prozessorbaugruppen entsprechend der erforderlichen Kanalkapazität, der erforderlichen Bandbreite, der Anzahl der zu unterstützenden Node Bs und der benötigten Gesamtbreite zu den Node Bs dimensioniert werden. Die Higher Layer Protokolle (HL) werden für alle Schnittstellen zusammengefasst und auf herkömmlichen Standard-Prozessorbaugruppen (Telecom Server) realisiert und in ihrer Anzahl entsprechend der erforderlichen Kanalkapazität dimensioniert.
   Durch die Integration des Diversity Handover (DHO)-Protokolls und der Transport Protokolle in die Interface orientierte Einheit XPU/xx kann die Architektur des RNC entscheidend vereinfacht werden.
   Dadurch dass Protokollstacks, die einer der Schnittstellen zugeordnet sind, von bestimmten Prozessorbaugruppen abgearbeitet werden, kann der Ansteuerungsaufwand für die Prozessorbaugruppen minimiert, die notwendigen Message-Übertragungen über den internen RNC Switch erheblich reduziert und damit der Signalfluss entscheidend vereinfacht werden. Dies führt schließlich zu einer erheblichen Beschleunigung der Verarbeitungsgeschwindigkeit innerhalb des RNC.
   Die eingangs beschriebenen Schnittstellenprotokolle gelten in UMTS-Funknetzwerken. Unter Beibehaltung der Transport Schicht und Austausch des Radio Processing und höherer Layer Protokolle kann das erfindungsgemäße Verfahren außer für UMTS auch für beliebig andere Telekommunikationsstandards, insbesondere in GSM-Funknetzwerken, eingesetzt werden.
   Gemäß einer vorteilhaften Weiterbildung der vorliegenden Erfindung wird vorgeschlagen, dass die Protokolle, die innerhalb eines der Schnittstelle zu einer Vermittlungseinrichtung zugeordneten Protokollstacks abgearbeitet werden und die einer Transport-Schicht, einer Schicht 1 oder einer Schicht 2 angehören, mindestens einer Prozessorbaugruppe (XPU/-Iu) entsprechend der benötigten Kanalkapazität oder Kanalbreite zugewiesen werden.
   Außerdem wird vorgeschlagen, dass die Protokolle, die innerhalb eines der Schnittstelle zu einem weiteren RNC zugeordneten Protokollstacks abgearbeitet werden und die einer Transport-Schicht, einer Schicht 1 oder einer Schicht 2 angehören, mindestens einer Prozessorbaugruppe entsprechend der benötigten Kanalkapazität oder Kanalbreite zugewiesen werden.
   Des weiteren wird vorgeschlagen, dass die Protokolle, die innerhalb eines der Schnittstelle zu einem Endgerät zugeordneten Protokollstacks abgearbeitet werden und die einer Transport-Schicht, einer Schicht 1 oder einer Schicht 2 angehören, mindestens einer Prozessorbaugruppe entsprechend der benötigten Kanalkapazität oder Kanalbreite zugewiesen werden.
   Schließlich wird vorgeschlagen, dass die Protokolle, die innerhalb eines der Schnittstelle zu einer Basisstation zugeordneten Protokollstacks abgearbeitet werden und die einer Transport-Schicht, einer Schicht 1 oder einer Schicht 2 angehören, mindestens einer Prozessorbaugruppe entsprechend der benötigten Anzahl von Node Bs und der bentötigten Gesamtbandbreite zu den Node Bs zugewiesen werden.
   Es ist denkbar, dass die Protokolle, die einer Schicht 3 angehören und den Schnittstellen zugeordnet sind, mindestens einer weiteren Prozessorbaugruppe umfassend mehrere Einzelprozessoren entsprechend der benötigten Kanalkapazität, Kanalbandbreite, der benötigten Anzahl von Node Bs und der benötigten Gesamtbandbreite zu den Node Bs zugewiesen werden.
   Ausgehend von einer universellen Vorrichtung (sog. Prozessor Board) zur Realisierung einer Transport Schicht, einer Schicht 1 und einer Schicht 2 für eine Telekommunikations-Schnittstelle einer Vorrichtung (RNC) zum Steuern eines Funkzellenclusters bestehend aus mehreren Funkzellen eines Funknetzwerks wird vorgeschlagen, dass die genaue Funktion der universellen Vorrichtung durch ein ladbares Computerprogramm realisierbar ist. Das Computerprogramm kann bspw. während der Initialisierungsphase des RNC in Speicherelemente der Prozessor Boards des RNC geladen werden.
   Als eine weitere Lösung der Aufgabe der vorliegenden Erfindung wird ausgehend von der Vorrichtung (RNC) zum Steuern eines Funkzellenclusters der eingangs genannten Art vorgeschlagen, dass die Protokollstacks verschiedenen der Multi-Prozessor-Einheiten zugewiesen sind, und dass der RNC Mittel zur Zuweisung eines Protokolls eines Protokollstacks zu einem Einzelprozessor der Multi-Prozessor-Einheiten in Abhängigkeit davon aufweist, welchem Protokollstack das Protokoll und welcher Schicht innerhalb des Protokollstacks das Protokoll angehört.
   Gemäß einer vorteilhaften Weiterbildung wird vorgeschlagen, dass die Mittel zur Zuweisung eines Protokolls zu einem Einzelprozessor eine Transport Schicht, eine Schicht 1 (Layer 1) und eine Schicht 2 (Layer 2) für eine Schnittstelle (Iu, Iur, Iub-UE, Iub-NB) des RNC realisieren.

Die Vorteile des erfindungsgemäßen Verfahrens und der erfindungsgemäßen Vorrichtung (RNC) kommen insbesondere in einem sog. UMTS Terrestrial Radio Access (UTRA)-Netzwerk zum tragen.

Bei der erfindungsgemäßen Vorrichtung kann ohne großen Hardware-Aufwand eine ausreichende Redundanz erzielt werden, da die XPU/xx Prozessorbaugruppen und die High Level (HL) Prozessorbaugruppen des RNC jeweils gleich ausgebildet sind. Zudem ist die erfindungsgemäße Vorrichtung besonders gut skalierbar, da zur Erhöhung der Kanalkapazität oder Anzahl der Node Bs einfach zusätzliche Prozessorbaugruppen vorgesehen und diesen wiederum bestimmte Protokollstacks zugewiesen werden müssen.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: einen schematischen Aufbau einer erfindungsgemäßen Vorrichtung (RNC) zum Steuern eines Funkzellenclusters eines Funknetzwerks; und
- Figur 2: eine weitere schematische Ansicht der erfindungsgemäßen Vorrichtung gemäß Figur 1.

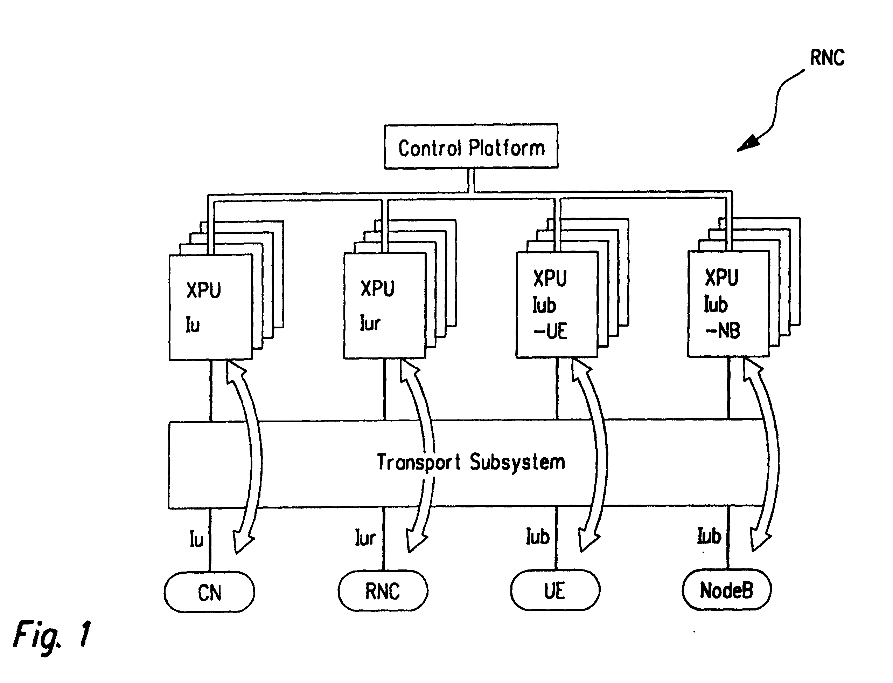

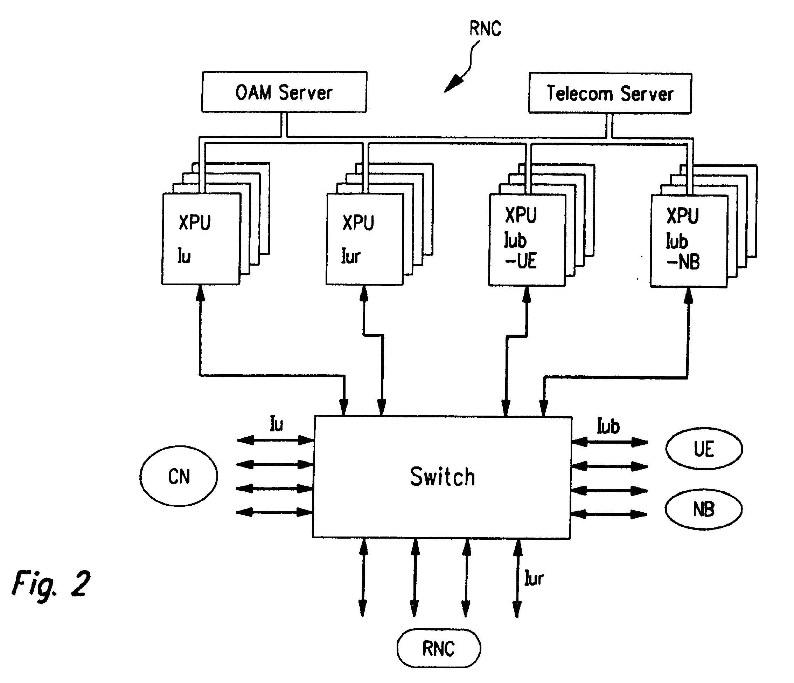

Eine in Figur 1 und Figur 2 dargestellte erfindungsgemäße Vorrichtung wird auch als Radio Network Controller (RNC) bezeichnet. Der RNC steuert ein Funkzellencluster bestehend aus mehreren Funkzellen eines UMTS Terrestrial Radio Access (UTRA)-Funknetzwerks.

Der RNC ist in mehrere Hierarchie-Ebenen unterteilt. Die oberste Ebene wird als Control Platform bezeichnet und umfasst einen OAM Server und einen Telecom Server (vgl. Figur 2). Die Control Platform steht über eine Ethernet-Verbindung mit einer darunter liegenden Ebene unmittelbar in Verbindung. Die darunter liegende Ebene wird als Aux Subsystem bezeichnet und umfasst mehrere Prozessorbaugruppen XPU/xx. Jeweils vier Einzelprozessoren sind zu einer Prozessorbaugruppe XPU/-Iu, XPU/-Iur, XPU/-UE und XPU/-NB zusammengefasst. Die darunter liegende Ebene wird als Transport Subsystem bezeichnet und umfasst ein mit Switch bezeichnetes Schaltelement. Der Switch ist als ein Internet Protocol (IP)-Rooter oder als ein ATM Cross Connect ausgebildet.

Von dem Switch zweigen mehrere Schnittstellen Iu, Iur, Iub-UE, Iub-NB zu verschiedenen Netzkomponenten des Funknetzwerks ab. Die Komponenten des Funknetzwerks umfassen mehrere Endgeräte, sog. User Equipments (UEs), mindestens eine Basisstation, sog. Node Bs (NBs) und mindestens eine weitere Vorrichtung, sog. Radio Network Controller (RNC), zum Steuern des Funkzellenclusters. Das Funknetzwerk wird an eine Vermittlungseinrichtung, sog. Core Network (CN), angeschlossen. Über das Schaltelement sind die Schnittstellen Iu, Iur, Iub-UE und Iub-NB mit den Prozessorgruppen XPU/-Iu, XPU/-Iur, XPU/-UE und XPU/-NB verschaltet.

Die Prozessoren XPU/xx in dem RNC dienen zur Verarbeitung von Nachrichten (sog. Messages), die über die Schnittstellen Iu, Iur, Iub-UE und Iub-NB von den übrigen Komponenten des Funknetzwerks eingehen bzw. von dem RNC an diese ausgesandt werden.

Bei UMTS sind gemeinsame Transport Kanäle (FACH, RACH, DSCH) - einer oder mehrere für jede Basisstation NB - vorgesehen. Die dedizierten DCH-Kanäle sind pro UE vorhanden und werden entsprechend des jeweiligen UE Standorts im Funkzellencluster auf mehrere Basisstationen NB aufgeteilt. Deshalb gibt es eine Aufteilung von NB-abhängigen Protokollen und UE-abhängigen Protokollen auf zwei verschiedene Prozessorengruppen XPU/-UE und XPU/-NB. Ein weiterer Grund für diese Aufteilung ist die mögliche freie Zuordnung von Rechenressourcen, die den XPU/-UE Protokollstack abarbeiten, zu den Rechenressourcen für den XPU/-NB Protokollstack (inklusive der Transportterminierung für die externe Iub-Schnittstelle). Damit ist eine flexible Zuordnung der dedizierten Kanäle zu den externen Iub-Schnittstellen möglich, die vorteilhaft für die Soft- und Hard Handover Realisierung ist.

Schließlich kann die erfindungsgemäße RNC-Architektur auf einfache Weise an andere Telekommunikations-Standards, bspw. Global System for Mobile Communication (GSM), angepasst werden.

## Patentansprüche

1. Verfahren zur Konfiguration einer Vorrichtung zum Steuern eines Funkzellenclusters umfassend mehrere Funkzellen eines Funknetzwerks, wobei das Funknetzwerk verschiedene Netzkomponenten, nämlich mindestens ein Endgerät (UE), mindestens eine Basisstation (NB), mindestens eine Vorrichtung (RNC) zum Steuern eines Funkzellenclusters und mindestens eine Vermittlungseinrichtung (CN) aufweist, und wobei die Vorrichtung zum Steuern eines Funkzellenclusters (RNC) über Schnittstellen (Iu, Iur, Iub-UE, Iub-NB) mit den Netzkomponenten (UE, NB, RNC, CN) in Verbindung steht, umfassend den Schritt:
- Vorsehen von mehreren, den verschiedenen Schnittstellen (Iu, Iur, Iub-UE, Iub-NB) zugeordnete Protokollstacks zum Abarbeiten von Protokollen,
**gekennzeichnet durch** die nachfolgenden Schritte:
- Vorsehen von Multi-Prozessor-Einheiten umfassend mehrere Prozessorgruppen (XPU/-Iu, XPU/-Iur, XPU/-UE, XPU/-NB) mit jeweils mehreren Einzelprozessoren in der Vorrichtung zum Steuern eines Funkzellenclusters (RNC); und
- Zuweisen eines Protokolls eines Protokollstacks zu einem Einzelprozessor der Multi-Prozessor-Einheiten in Abhängigkeit davon, welchem Protokollstack das Protokoll und welcher Schicht innerhalb des Protokollstacks das Protokoll angehört.

2. Verfahren nach Anspruch 1, **dadurch gekennzeichnet, dass** die Protokolle, die innerhalb eines der Schnittstelle (Iu) zu einer Vermittlungseinrichtung (CN) zugeordneten Protokollstacks abgearbeitet werden und die einer Transport-Schicht, einer Schicht 1 oder einer Schicht 2 angehören, mindestens einer Prozessorbaugruppe (XPU/-Iu) entsprechend der benötigten Kanalkapazität oder Kanalbreite zugewiesen werden.

3. Verfahren nach Anspruch 1 oder 2, **dadurch gekennzeichnet, dass** die Protokolle, die innerhalb eines der Schnittstelle (Iur) zu einem weiteren RNC zugeordneten Protokollstacks abgearbeitet werden und die einer Transport-Schicht, einer Schicht 1 oder einer Schicht 2 angehören, mindestens einer Prozessorbaugruppe (XPU/-Iur) entsprechend der benötigten Kanalkapazität oder Kanalbreite zugewiesen werden.

4. Verfahren nach einem der Ansprüche 1 bis 3, **dadurch gekennzeichnet, dass** die Protokolle, die innerhalb eines der Schnittstelle (Iub-UE) zu einem Endgerät (UE) zugeordneten Protokollstacks abgearbeitet werden und die einer Transport-Schicht, einer Schicht 1 oder einer Schicht 2 angehören, mindestens einer Prozessorbaugruppe (XPU/-UE) entsprechend der benötigten Kanalkapazität oder Kanalbreite zugewiesen werden.

5. Verfahren nach einem der Ansprüche 1 bis 4, **dadurch gekennzeichnet, dass** die Protokolle, die innerhalb eines der Schnittstelle (Iub-NB) zu einer Basisstation (NB) zugeordneten Protokollstacks abgearbeitet werden und die einer Transport-Schicht, einer Schicht 1 oder einer Schicht 2 angehören, mindestens einer Prozessorbaugruppe (XPU/-NB) entsprechend der benötigten Anzahl von Basisstationen (NB) und der benötigten Gesamtbandbreite zu den Basisstationen (NB) zugewiesen werden.

6. Verfahren nach einem der Ansprüche 1 bis 5, **dadurch gekennzeichnet, dass** die Protokolle, die einer Schicht 3 angehören und den Schnittstellen (Iu, Iur, Iub-UE, Iub_NB) zugeordnet sind, mindestens einer weiteren Prozessorbaugruppe umfassend mehrere Einzelprozessoren entsprechend der benötigten Kanalkapazität, Kanalbandbreite, der benötigten Anzahl von Basisstationen (NB) und der benötigten Gesamtbandbreite zu den Basisstationen (NB) zugewiesen werden.

7. Verfahren nach einem der Ansprüche 1 bis 6, **dadurch gekennzeichnet, dass** das Verfahren in einem UMTS- oder GSM-Funknetzwerk eingesetzt wird.

8. Vorrichtung (RNC) zum Steuern eines Funkzellenclusters umfassend mehrere Funkzellen eines Funknetzwerks, wobei das Funknetzwerk verschiedene Netzkomponenten, nämlich mindestens ein Endgerät (UE), mindestens eine Basisstation (NB), den RNC, wahlweise weitere RNCs und mindestens eine Vermittlungseinrichtung (CN) aufweist, und wobei der RNC über Schnittstellen (Iu, Iur, Iub-UE, Iub-NB) mit den übrigen Netzkomponenten (UE, NB, RNC, CN) in Verbindung steht und mehrere Multi-Prozessor-Einheiten umfassend mehrere Prozessorgruppen (XPU/-Iu, XPU/-Iur, XPU/-UE, XPU/-NB) mit jeweils mehreren Einzelprozessoren aufweist, und wobei den verschiedenen Schnittstellen (Iu, Iur, Iub-UE, Iub-NB) zugeordnete Protokollstacks zum Abarbeiten von Protokollen vorgesehen sind, **dadurch gekennzeichnet, dass** die Protokollstacks verschiedenen der Multi-Prozessor-Einheiten zugewiesen sind, und dass der RNC Mittel zur Zuweisung eines Protokolls eines Protokollstacks zu einem Einzelprozessor der Multi-Prozessor-Einheiten in Abhängigkeit davon aufweist, welchem Protokollstack das Protokoll und welcher Schicht innerhalb des Protokollstacks das Protokoll angehört.

9. Vorrichtung (RNC) zum Steuern eines Funkzellenclusters nach Anspruch 8, **dadurch gekennzeichnet, dass** die Mittel zur Zuweisung eines Protokolls zu einem Einzelprozessor eine Transport Schicht, eine Schicht 1 und eine Schicht 2 für eine Schnittstelle (IU, Iur, Iub-UE, Iub-NB) des RNC realisieren.

## Revendications

1. Procédé pour la configuration d'un dispositif de contrôle d'un noeud de cellules radio comprenant plusieurs cellules d'un réseau radio, sachant que ce même réseau présente différents composants, à savoir au moins un terminal utilisateur (UE), au moins une station de base (NB), au moins un dispositif (RNC) de contrôle d'un noeud de cellules radio et au moins un dispositif de transmission (CN), et que le dispositif de contrôle d'un noeud de cellules radio (RNC) est relié aux composants du réseau (UE, NB, RNC, CN) par l'intermédiaire d'interfaces (Iu, Iur, Iub-UE, Iub-NB), le procédé comprenant l'étape suivante :
- utilisation de plusieurs piles de protocoles reliées aux différentes interfaces (Iu, Iur, Iub-UE, Iub-NB) pour l'exécution de protocoles,
**caractérisé par** les étapes suivantes :
- utilisation d'unités multiprocesseurs comprenant plusieurs ensembles de processeurs (XPU/-Iu, XPU/-Iur, XPU/-UE, XPU/-NB) avec chacun plusieurs processeurs individuels dans le dispositif de contrôle d'un noeud de cellules radio ; et
- affectation d'un protocole d'une pile de protocoles à un processeur individuel des unités multiprocesseurs en fonction de la pile de protocoles et de la couche à l'intérieur de la pile de protocole desquelles le protocole fait partie.

2. Procédé selon la revendication 1, **caractérisé en ce que** les protocoles exécutés à l'intérieur d'une pile de protocoles connectée à l'interface (lu) vers un dispositif de transmission (CN) et faisant partie d'une couche de transport, d'une couche 1 ou d'une couche 2, sont affectés à au moins un ensemble de processeurs (XPU/-Iu), en fonction de la capacité on de la largeur de canal nécessaire.

3. Procédé selon la revendication 1 ou 2, **caractérisé en ce que** les protocoles exécutés à l'intérieur d'une pile de protocoles connectée à l'interface (Iur) vers un autre RNC et faisant partie d'une couche de transport, d'une couche 1 ou d'une couche 2, sont affectés à au moins un ensemble de processeurs (XPU/-Iur), en fonction de la capacité ou de la largeur de canal nécessaire.

4. Procédé selon une des revendications 1 à 3, **caractérisé en ce que** les protocoles exécutés à l'intérieur d'une pile de protocoles connectée à l'interface (lub-UE) vers un terminal utilisateur (UE) et faisant partie d'une couche de transport, d'une couche 1 ou d'une couche 2, sont affectés à au moins un ensemble de processeurs (XPU/-UE), en fonction de la capacité ou de la largeur de canal nécessaire.

5. Procédé selon une des revendications 1 à 4, **caractérisé en ce que** les protocoles exécutés à l'intérieur d'une pile de protocoles connectée à l'interface (Iub-NB) vers une station de base (NB) et faisant partie d'une couche de transport, d'une couche 1 ou d'une couche 2, sont affectés à au moins un ensemble de processeurs (XPU/-NB), en fonction du nombre nécessaire de stations de base (NB) et de la largeur totale de bande nécessaire vers les stations de base (NB).

6. Procédé selon une des revendications 1 à 5, **caractérisé en ce que** les protocoles exécutés à l'intérieur d'une pile de protocoles faisant partie d'une couche 3 et reliés aux interfaces (Iu, Iur, Iub-UE, Iub-NB), sont affectés à au moins un autre ensemble de processeurs comprenant plusieurs processeurs individuels, en fonction de la capacité de canal nécessaire, de la largeur de bande de canal, du nombre nécessaire de stations de base (NB) et de la largeur totale de bande nécessaire vers les stations de base (NB).

7. Procédé selon une des revendications 1 à 6, **caractérisé en ce que** le procédé est utilisé dans un réseau UMTS ou GSM.

8. Dispositif (RNC) de contrôle d'un noeud de cellules radio comprenant plusieurs cellules d'un réseau radio, sachant que ce même réseau présente différents composants, à savoir au moins un terminal utilisateur (UE), au moins une station de base (NB), le RNC, éventuellement d'autres RNC, et au moins un dispositif de transmission (CN), et que le RNC est relié aux autres composants du réseau (UE, NB, RNC, CN) par l'intermédiaire d'interfaces (Iu, Iur, Iub-UE, Iub-NB) et présente plusieurs unités multiprocesseurs comprenant plusieurs ensembles de processeurs (XPU/-Iu, XPU/-Iur, XPU/-UE, XPU/-NB) avec chacun plusieurs processeurs individuels, et que des piles de protocoles reliées aux différentes interfaces (Iu, Iur, Iub-UE, Iub-NB) sont prévues pour l'exécution de protocoles, **caractérisé en ce que** la pile de protocole est affectée à plusieurs des unités multiprocesseurs, et que le RNC présente des moyens d'affectation d'un protocole d'une pile de protocoles à un processeur individuel des unités multiprocesseurs en fonction de la pile de protocoles et de la couche à l'intérieur de la pile de protocoles auxquelles le protocole appartient.

9. Dispositif (RNC) de contrôle d'un noeud de cellules radio selon la revendication 8, **caractérisé en ce que** les moyens d'affectation d'un protocole à un processeur individuel réalisent une couche de transport, une couche 1 et une couche 2 pour une interface (Iu, Iur, Iub-UE, Iub-NB) du RNC.

## Claims

1. Method for configuring a device for controlling a radio cell cluster comprising several radio cells of a radio network, wherein the radio network has various network components, namely at least one terminal (UE), at least one base station (NB), at least one device (RNC) for controlling a radio cell cluster and at least one switching device (CN) and wherein the device for controlling a radio cell cluster (RNC) is connected to the network components (UE, NB, RNC, CN) via interfaces (Iu, Iur, Iub-UE, Iub-NB), comprising the step:
- providing several protocol stacks allocated to the various interfaces (Iu, Iur, Iub-UE, Iub-NB) for executing protocols,
**characterised by** the following steps:
- providing multi-processor units comprising several processor groups (XPU/-Iu, XPU/-Iur, XPU/-UE, XPU/-NB) with several individual processors in each case in the device for controlling a radio cell cluster (RNC) and
- assigning a protocol of a protocol stack to an individual processor of the multi-processor units as a function of to which protocol stack the protocol and to which layer within the protocol stack the protocol belongs.

2. Method according to claim 1, **characterised in that** the protocols executed within a protocol stack allocated to the interface (Iu) to a switching device (CN) and belonging to a transport layer, a layer 1 or a layer 2 are assigned to at least one processor module (XPU/-Iu) corresponding to the required channel capacity or channel width.

3. Method according to claim 1 or 2, **characterised in that** the protocols executed within a protocol stack allocated to the interface (Iur) to a further RNC and belonging to a transport layer, a layer 1 or a layer 2 are assigned to at least one processor module (XPU/-Iur) corresponding to the required channel capacity or channel width.

4. Method according to one of claims 1 to 3,
**characterised in that** the protocols executed within a protocol stack allocated to the interface (Iub-UE) to a terminal (UE) and belonging to a transport layer, a layer 1 or a layer 2 are assigned to at least one processor module (XPU/-UE) corresponding to the required channel capacity or channel width.

5. Method according to one of claims 1 to 4,
**characterised in that** the protocols executed within a protocol stack allocated to the interface (Iub-NB) to a base station (NB) and belonging to a transport layer, a layer 1 or a layer 2 are assigned to at least one processor module (XPU/-NB) corresponding to the required number of base stations (NB) and the required overall bandwidth to the base stations (NB).

6. Method according to one of claims 1 to 5,
**characterised in that** the protocols belonging to a layer 3 and allocated to the interfaces (Iu, Iur, Iub-UE, Iub-NB) are assigned to at least one further processor module comprising several individual processors corresponding to the required channel capacity, channel bandwidth, the required number of base stations (NB) and the required overall bandwidth to the base stations (NB).

7. Method according to one of claims 1 to 6,
**characterised in that** the method is used in a UMTS or GSM radio network.

8. Device (RNC) for controlling a radio cell cluster comprising several radio cells of a radio network, wherein the radio network has various network components, namely at least one terminal (UE), at least one base station (NB), the RNC, optionally further RNCs and at least one switching device (CN) and wherein the RNC is connected to the other network components (UE, NB, RNC, CN) via interfaces (Iu, Iur, Iub-UE, Iub-NB) and several multi-processor units comprising several processor groups (XPU/-Iu, XPU/-Iur, XPU/-UE, XPU/-NB) with several individual processors in each case and wherein protocol stacks allocated to the various interfaces (Iu, Iur, Iub-UE, Iub-NB) are provided for executing protocols,
**characterised in that** the protocol stacks are assigned to various of the multi-processor units and the RNC has means for assigning a protocol of a protocol stack to an individual processor of the multi-processor units as a function of to which protocol stack the protocol and to which layer within the protocol stack the protocol belongs.

9. Device (RNC) for controlling a radio cell cluster according to claim 8, **characterised in that** the means for assigning a protocol to an individual processor implement a transport layer, a layer 1 and a layer 2 for an interface (Iu, Iur, Iub-UE, Iub-NB) of the RNC.
